Europäisches Patentamt

European Patent Office

Office européen des brevets

(11) Veröffentlichungsnummer : **0 081 704**
**B1**

(12) **EUROPÄISCHE PATENTSCHRIFT**

(45) Veröffentlichungstag der Patentschrift :
06.07.88

(51) Int. Cl.⁴ : **G 02 B   6/38**

(21) Anmeldenummer : 82110844.6

(22) Anmeldetag : 24.11.82

(54) Vorrichtung zum Positionieren von Lichtleitfasern in V-Nuten.

(30) Priorität : 14.12.81 DE 3149466

(43) Veröffentlichungstag der Anmeldung :
22.06.83 Patentblatt 83/25

(45) Bekanntmachung des Hinweises auf die Patenterteilung : 06.07.88 Patentblatt 88/27

(84) Benannte Vertragsstaaten :
BE DE FR GB IT NL

(56) Entgegenhaltungen :
DE-A- 2 930 831
US-A- 4 045 121
US-A- 4 289 558

(73) Patentinhaber : ANT Nachrichtentechnik GmbH
Gerberstrasse 33
D-7150 Backnang (DE)

(72) Erfinder : Kern, Wolfgang, Dipl.-Ing.
Vischerstrasse 42
D-7140 Ludwigsburg (DE)

## Beschreibung

Die vorliegende Erfindung betrifft eine Vorrichtung mit einer mit V-Nuten versehenen Spleißanordnung zum Positionieren von Lichtleitfasern.

Aus der DE-OS 29 30 831 ist eine Spleißanordnung bekannt mit Hilfsmitteln zur Führung und definierten Ausrichtung der Lichtleitfasern auf ihre zugehörigen V-Nuten. Dazu ist vor den V-Nuten ein Blech angeordnet, aus dessen Oberfläche reihenweise Nieten herausragen. Die Nieten sind so positioniert, daß zwischen die Nietreihen gelegte Lichtleitfasern in gewünschter Weise geführt werden. Allerdings bieten die Nietreihen den Lichtleitfasern beim Einlegen in die V-Nuten keinen ausreichenden Halt, was gerade die Unterbringung vieler Lichtleitfasern in eine Mehrfachspleißanordnung erschwert.

Der Erfindung liegt die Aufgabe zugrunde, eine Vorrichtung zum Positionieren von Lichtleitfasern in einer mit V-Nuten versehenen Spleißanordnung anzugeben, die das Einlegen der Lichtleitfasern in die V-Nuten erleichtert, indem sie für eine definierte Zuordnung der Lichtleitfasern zu den V-Nuten sorgt und den Lichtleitfasern Halt verleiht, damit sie sofort nach dem Einlegen gegen Herausrutschen aus den V-Nuten gesichert sind.

Die Aufgabe wird erfindungsgemäß dadurch gelöst, daß quer vor den V-Nuten ein kammartiges Federelement angeordnet ist, zwischen dessen federnden Stegen die Lichtleitfasern einklemmbar sind, wobei das Federelement so bemessen und positioniert ist, daß auf jede V-Nut ein von zwei Stegen begrenzter Spalt ausgerichtet ist.

Zweckmäßige Ausführungen der Erfindung gehen aus den Unteransprüchen hervor.

Anhand eines in der Zeichnung dargestellten Ausführungsbeispiels wird nun die Erfindung näher erläutert.

Fig. 1 zeigt der Draufsicht und

Fig. 2 die Seitenansicht einer Positioniervorrichtung für Lichtleitfasern.

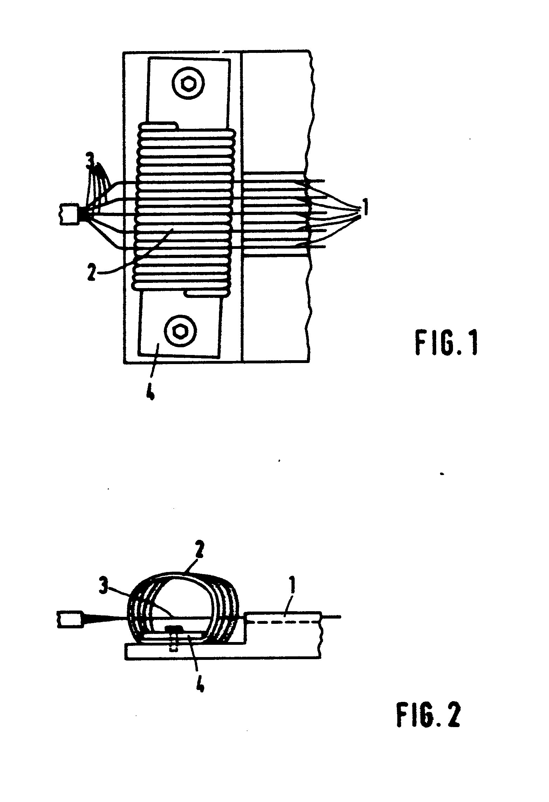

Die beiden Figuren 1 und 2 zeigen einen Ausschnitt einer Mehrfachspleißanordnung, in die mehrere parallel verlaufende V-Nuten 1 eingelassen sind. Die V-Nuten gewährleisten eine exakte gegenseitige Ausrichtung der von beiden Seiten in die V-Nuten gelegten, miteinander zu verbindenden Lichtleitfasern.

Vor den beiden Frontseiten (hier ist nur eine dargestellt) der V-Nuten ist jeweils eine Schraubenfeder 2 angeordnet. Und zwar liegt die Feder quer vor den V-Nuten so, daß ihre Windungen 3 parallel zu den V-Nuten ausgerichtet sind. Wie die Ansichten der Fig. 1 und 2 verdeutlichen, ist die Feder ein wenig schräg gelagert, um die Windungssteigung auszugleichen. Der Drahtdurchmesser der Feder ist so gewählt, daß jeder V-Nut genau ein Spalt zwischen zwei Windungen gegenübersteht. Jede zwischen zwei Windungen eingefügte Lichtleitfaser 3 kommt daher automatisch in die ihr zugeordnete V-Nut zu liegen. Die Feder 2 in ihrer Eigenschaft als Zugfeder bewirkt, daß die Lichtleitfasern zwischen den Windungen festgeklemmt werden und damit ein Herausrutschen der Fasern aus den V-Nuten verhindert wird. Bei der Dimensionierung der Feder ist darauf zu achten, daß durch den Federdruck die Fasern nicht zerstört werden.

Befestigt wird die Feder z. B. mittels einer durch sie hindurchgeführten Leiste 4, die beidseitig der Feder mit dem Boden der Spleißanordnung verschraubt ist.

Es ist auch möglich, eine Tellerfeder zu verwenden, zwischen deren federnd gelagerte Scheiben die Lichtleitfasern eingeklemmt werden. Für die Bemessung der Scheiben und der Federkraft muß das gleiche gelten wie für die oben im einzelnen beschriebene Schraubenfeder.

## Patentansprüche

1. Vorrichtung mit einer mit V-Nuten versehenen Spleißanordnung zum Positionieren von Lichtleitfasern dadurch gekennzeichnet, daß quer vor den V-Nuten (1) ein kammartiges Federelement (2) angeordnet ist, zwischen dessen federnden Stegen die Lichtleitfasern (3) einklemmbar sind, wobei das Federelement so bemessen und positioniert ist, daß auf jede V-Nut ein von zwei Stegen begrenzter Spalt ausgerichtet ist.

2. Vorrichtung nach Anspruch 1, dadurch gekennzeichnet, daß das Federelement eine Schraubenfeder (2) ist.

3. Vorrichtung nach Anspruch 2, dadurch gekennzeichnet, daß die Schraubenfeder (2) mittels einer durch sie hindurchgeführten und beidseitig der Feder befestigbaren Leiste (4) gegen den Boden der Spleißanordnung gedrückt ist.

4. Vorrichtung nach Anspruch 1, dadurch gekennzeichnet, daß das Federelement eine Tellerfeder ist.

## Claims

1. Device with a splicing arrangement provided with V-grooves for the positioning of optically conducting fibres, characterised thereby, that a comb-like spring element (2), between the resilient webs of which the optically conducting fibres (3) are clampable, is arranged transversely in front of the V-grooves, wherein the spring element is so dimensioned and positioned that a gap bounded by two webs is aligned with each V-groove.

2. Device according to claim 1, characterised thereby, that the spring element is a helical spring (2).

3. Device according to claim 2, characterised thereby, that the helical spring (2) is pressed against the bottom of the splicing arrangement by means of a strip (4) fastenable at both ends of the spring and led through it.

4. Device according to claim 1, characterised thereby, that the spring element is a plate spring.

## Revendications

1. Appareil comprenant un dispositif d'épissure pourvu de rainures en V pour le positionnement de fibres optiques, caractérisé par un élément élastique (2) analogue à un peigne, qui est disposé transversalement devant les rainures en V (1) et entre les dents ou parties élastiques duquel peuvent être serrées les fibres optiques (3), l'élément élastique étant dimensionné et positionné de manière qu'une fente délimitée par deux dents ou parties correspondantes de l'élément élastique soit alignée avec chaque rainure en V.

2. Appareil selon la revendication 1, caractérisé en ce que l'élément élastique est un ressort hélicoïdal (2).

3. Appareil selon la revendication 2, caractérisé en ce que le ressort hélicoïdal (2) est pressé contre l'embase du dispositif d'épissure au moyen d'une barrette (4) passée à travers le ressort et pouvant être fixée des deux côtés du ressort.

4. Appareil selon la revendication 1, caractérisé en ce que l'élément élastique est un ressort à disques.

FIG.1

FIG.2